# EUROPEAN PATENT SPECIFICATION

(11) **EP 2 137 612 B1**
(45) Date of publication and mention of the grant of the patent: **13.01.2016**
(21) Application number: 08732708.6
(22) Date of filing: 21.03.2008
(51) Int. Cl.: G06F 9/38, G06F 9/30

(54) **INSTRUCTION COMMUNICATION TECHNIQUES FOR MULTI-PROCESSOR SYSTEM**
ANWEISUNGSKOMMUNIKATIONSTECHNIKEN FÜR EIN MEHRPROZESSORSYSTEM
TECHNIQUES DE COMMUNICATION D'INSTRUCTION POUR SYSTÈME MULTIPROCESSEUR

(30) Priority: 23.03.2007 US 896497 P; 27.11.2007 US 945790
(43) Date of publication of application: 30.12.2009
(73) Proprietor: QUALCOMM Incorporated, San Diego, CA 92121 (US)
(72) Inventor: FORTIER, Thomas, San Diego, California 92121 (US)
(74) Representative: Carstens, Dirk Wilhelm
(86) International application number: PCT/US2008/057912
(87) International publication number: WO 2008/118812

(56) References cited:
- WO-A-97/34226
- US-A1- 2002 069 344
- CRUMMEY T P ET AL: "A hardware scheduler for parallel processing in control applications" CONTROL, 1994. CONTROL '94. VOLUME 2., INTERNATIONAL CONFERENCE ON COVENTRY, UK, LONDON, UK,IEE, UK, 1 January 1994 (1994-01-01), pages 1098-1103, XP006513028 ISBN: 978-0-85296-611-2
- BAXTER B ET AL: "Apply: A Parallel Compiler on iWarp for Image-Processing Applications" 19910428; 19910428 - 19910501, 28 April 1991 (1991-04-28), pages 186-193, XP010255021
- KOLINUMMI P ET AL: "Chained backplane communication architecture for scalable multiprocessor systems" JOURNAL OF SYSTEMS ARCHITECTURE, ELSEVIER SCIENCE PUBLISHERS BV., AMSTERDAM, NL, vol. 46, no. 11, 1 September 2000 (2000-09-01), pages 955-972, XP004229041 ISSN: 1383-7621
- HEY A J G ET AL: "Multi-paradigm parallel programming" SYSTEM SCIENCES, 1989. VOL.II: SOFTWARE TRACK, PROCEEDINGS OF THE TWEN TY-SECOND ANNUAL HAWAII INTERNATIONAL CONFERENCE ON KAILUA-KONA, HI, USA 3-6 JAN. 1989, WASHINGTON, DC, USA,IEEE COMPUT. SOC. PR, US, 3 January 1989 (1989-01-03), pages 716-725, XP010014960 ISBN: 978-0-8186-1912-0
- CANTINEAU O ET AL: "Efficient parallelisation of an MPEG-2 codec on a TMS320C80 video processor" IMAGE PROCESSING, 1998. ICIP 98. PROCEEDINGS. 1998 INTERNATIONAL CONFE RENCE ON CHICAGO, IL, USA 4-7 OCT. 1998, LOS ALAMITOS, CA, USA,IEEE COMPUT. SOC, US, vol. 3, 4 October 1998 (1998-10-04), pages 977-980, XP010586847 ISBN: 978-0-8186-8821-8

## Description

### TECHNICAL FIELD

The present disclosure relates generally to the field of multi-processor systems and, more specifically, to techniques for communicating instructions to a slave processor in a multi-processor system having a master processor and pipelined slave processors.

### BACKGROUND

In complex computer systems common workload is often distributed among and performed in parallel by a plurality of processors. A multi-processor system typically includes a master processor administering a plurality of pipelined (i.e., connected in series) processors or co-processors, which are collectively referred to herein as slave processors. For example, such multi-processor systems may be used for processing of large amounts of video data or rendering graphics, among others in computationally intensive applications.

In the multi-processor system, however, the master processor and each of the slave processors may operate using instructions (i.e., commands) and data formatted in their native and, as such, different programming languages. Conventionally, instructions forwarded by the master processor downstream to a respective slave processor are decoded by each intermediate slave processor in its native programming language, re-coded in the programming language of the next downstream intermediate slave processor, and then forwarded to that processor.

Such cycles of decoding the received instructions and, after re-coding in the native programming language of the downstream intermediate slave processor, forwarding them downstream continues until the instructions reach an intended, or destined, slave processor. At the destined slave processor, the received instructions are de-coded in the native programming language of that processor and executed.

Complexity of such multi-step routine for communicating instructions to slave processors adversely affects overall performance of the multi-processor system and, in particular, limits design flexibility and command throughput of the system. Despite the considerable efforts in the art devoted to increasing efficiency of communicating instructions from the master processor to the pipelined slave processors, further improvements would be desirable.

There is therefore a need in the art for techniques to efficiently implement communication of instructions to pipelined slave processors in multi-processor systems.
Attention is drawn to document CRUMMEY T P ET AL: "A hardware scheduler for parallel processing in control applications", CONTROL, 1994. CONTROL 94. VOLUME 2., INTERNATIONAL CONFERENCE ON COVENTRY, UK, LONDON, UK, IEE, UK, 1 January 1994 (1994-01-01), pages 1098-1103, XP006513028, ISBN: 978-0-85296-611-2. This document relates to minimizing the overhead of scheduling tasks to multiple processors.
Further attention is drawn to document BAXTER B ET AL: "Apply: A Parallel Compiler on iWarp for Image-Processing Applications", 19910428; 19910428 - 19910501, 28 April 1991 (1991-04-28), pages 186-193, XP01 0255021. This document relates to the Apply language, the computational strategy employed in implementing the language for iWarp, and the utilization of iWarp's low-overhead communication facilities.

### SUMMARY

In accordance with the present invention, an integrated circuit, as set forth in claims 1 and 8, a multi-processor system, as set forth in claim 9, and a method for communicating instructions to a slave processor in a multi-processor system, as set forth in claim 10, is provided. Further embodiments are claimed in the dependent claims. Techniques for communicating instructions to slave processors in a multi-processor system having a master processor and pipelined slave processors are described herein. In an embodiment, the master processor generates a pass-through command having a header block and a payload block that includes instructions to a destined slave processor. The header block is coded using a computer language understood by the pipelined slave processors, and the payload block is coded in a computer language understood by the destined slave processor. The master processor forwards the pass-through command to an outermost one of the pipelined slave processors and then the pass-through command is re-transmitted, without recoding, by intermediate (i.e., non-destined) slave processors until the pass-through command reaches the destined slave processor, which executes the instructions.

In one design, the system uses the inventive method to perform at least one of processing video data or rendering graphics.

Various aspects and embodiments of the invention are described in further detail below.

### BRIEF DESCRIPTION OF THE DRAWINGS

FIG. 1 shows a block diagram of an exemplary multi-processor system.
FIG. 2 shows a schematic diagram illustrating a structure of a pass-through command used in the multi-processor system of FIG. 1.
FIG. 3 shows a flow diagram illustrating a method for communicating instructions to pipelined slave processors in the multi-processor system of FIG. 1.

To facilitate understanding, identical reference numerals have been used, where possible, to designate identical elements that are common to the figures, except that suffixes may be added, when appropriate, to differentiate such elements. The images in the drawings are simplified for illustrative purposes and are not depicted to scale. It is contemplated that features or steps of one embodiment may be beneficially incorporated in other embodiments without further recitation.

The appended drawings illustrate exemplary embodiments of the invention and, as such, should not be considered as limiting the scope of the invention that may admit to other equally effective embodiments.

### DETAILED DESCRIPTION

The term "exemplary" is used herein to mean "serving as an example, instance, or illustration." Any embodiment or design described herein as "exemplary" is not necessarily to be construed as preferred or advantageous over other embodiments or designs.

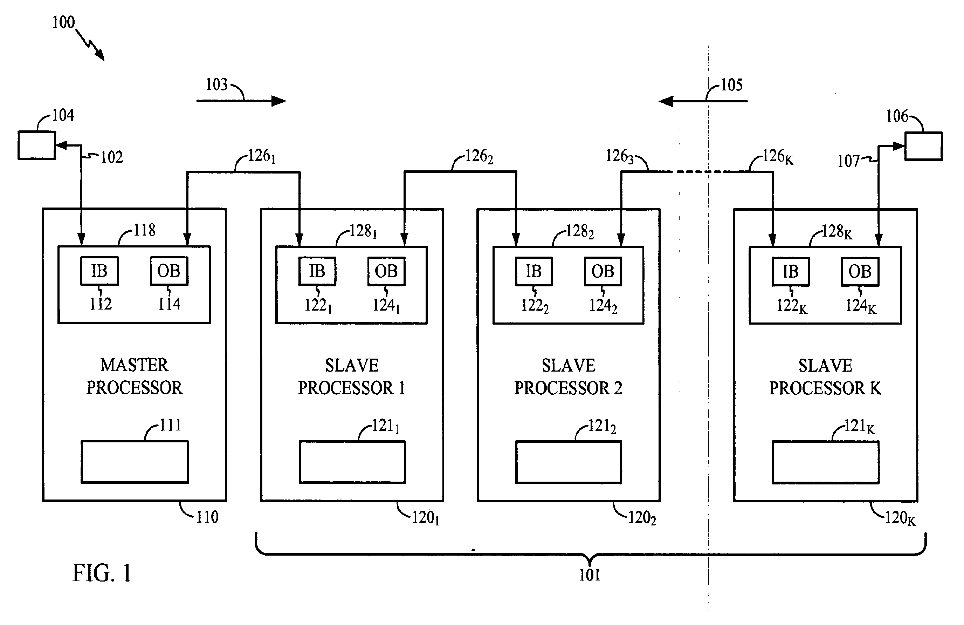

Referring to the figures, FIG. 1 depicts a block diagram of an exemplary multi-processor system 100 in accordance with one embodiment of the present invention. In exemplary applications, the system 100 may be used for processing video data and/or rendering graphics, among other computationally intensive data processing applications.

In one exemplary embodiment, the system 100 is a portion of a graphics processing unit (GPU) of a wireless communication apparatus, such as a cellular phone, a video game console, a personal digital assistant (PDA), a laptop computer, an audio/video-enabled device, and the like.

The GPU may be compliant, for example, with a document "OpenVG Specification, Version 1.0," July 28, 2005, which is publicly available. This document is a standard for 2-D vector graphics suitable for handheld and mobile devices, such as cellular phones and other referred to above wireless communication apparatuses.

In the depicted embodiment, the system 100 illustratively includes a master processor 110 and a plurality 101 of pipelined slave processors 120₁-120_{K}, which are connected using respective system interfaces 126₁-126_{K}, where K is an integer and K≥2. In one embodiment, each of the system interfaces 126₁-126_{K} includes a data bus, an address buss, and a command bus (none is shown). The master processor 110 and each of the slave processors 120₁-120_{K} may contain sub-processors, memories, peripheral devices, and support circuits, and the like elements, which, for brevity, are collectively shown herein as modules 111 and 121₁₋121_{K}, respectively.

The master processor 110 and pipelined slave processors 120₁-120_{K} may be formed on a single integrated circuit (IC) such as, for example, a system-on-chip (SoC) device. Alternatively, the master processor 110 and at least one of the slave processors 120₁-120_{K} may be formed on separate ICs.

In operation, the master processor 110 controls and, optionally, monitors data processing at the slave processors 120₁-120_{K}. The master processor 110 and each of the slave processors 120₁-120_{K} may operate using different formats (i.e., computer languages) for generating or executing internal instructions or internal data exchanges.

The master processor 110 comprises an input/output (I/O) module 118 including an input buffer (IB) 112 and an output buffer (OB) 114. Correspondingly, each of the slave processors 120₁-120_{K} comprises a respective input/output (I/O) module 128 including an input buffer 122 and an output buffer 124. In operation, the I/O modules 118 and 128₁-128_{K} facilitate information exchanges within the system 100 or to/from the system 100.

Using interface 102, the input buffer 112 of the master processor 110 may be connected to at least one of a remote processor, a network, or a user controls means, which are collectively shown as a means 104. Similarly, using interface 107, the output buffer 124_{K} of the slave processor 120_{K} may be connected to other remote processor, network, or user controls means, which are collectively shown as a means 106.

In the system 100, via a respective bi-directional system interface 126, an input buffer 122 of a preceding (i.e., upstream) slave processor 120 is connected to an output buffer 124 of the adjacent downstream slave processor, thus forming the plurality 101 of pipelined slave processors 120₁-120_{K}. For example, an input buffer 122₂ of a slave processor 120₂ is connected, via a system interface 126₂, to an output buffer 124₁ of a slave processor 120₁, and an output buffer 124₂ of the slave processor 120₂ is connected, via a system interface 126₃, to an input buffer 122₃ of a slave processor 120₃ (not shown).

In one embodiment, the output buffer 414 of the master processor 110 is connected, via a system interface 126₁, to an input buffer of an outermost slave processor of the plurality 101 of the pipelined slave processors 120, i.e., to an input buffer 122₁ of the slave processor 120₁. In operation, the master processor 110 administers control over the slave processors 120₁-120_{K} by generating and transmitting instructions to a respective slave processor. A slave processor, which is an intended recipient of these instructions, is hereafter referred to as a destined slave processor. The instructions are transmitted, via the system interface 126₁, from the output buffer 114 of the master processor 110 to an input buffer 122₁ of the outermost slave processor 120₁.

To reach the destined slave processor, the instructions should be received and then re-transmitted, or forwarded, downstream by one or more intermediate upstream slave processors, i.e., the slave processors disposed between the master processor and the destined slave processor. Herein, the terms "to forward" and "to re-transmit" are used interchangeably.

More specifically, via the respective system interface, the instructions from an output buffer of an upstream slave processor are forwarded to an input buffer of the respective downstream slave processor (i.e., forwarded in a direction illustrated using arrow 103), which then similarly forwards the instructions further downstream until they reach the destined slave processor.

For example, when the destined slave processor is the slave processor 120₃, the slave processor 120₁, via the system interface 126₂, forwards the instructions downstream to the slave processor 120₂, which then re-transmits the instructions to the destined slave processor 120₃, where the instructions are executed.

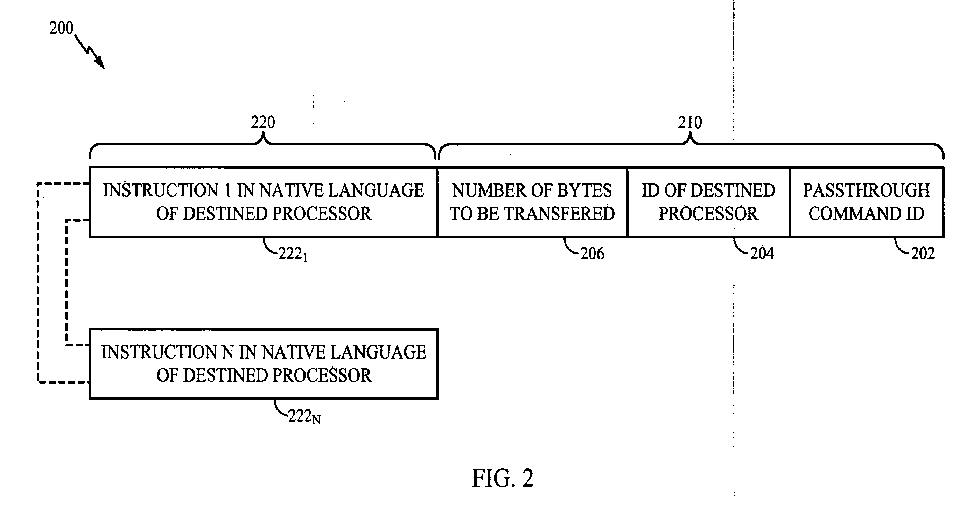

Referring to FIG. 2, to efficiently communicate instructions to a destined slave processor, the master processor 110 generates a pass-through command 200. In one embodiment, the pass-through command 200 instructs: (i) each non-destined slave processor to forward, without recoding, the pass-through command to a respective downstream slave processor (i.e., re-transmit the pass-through command in the direction of the arrow 103), and (ii) the destined slave processor to execute the instruction(s) contained in the pass-through command. In particular, the pass-through command 200 may instruct a non-destined slave processor 120 to copy the received pass through command from its input buffer 122 to the output buffer 124 of that slave processor.

In one embodiment, the pass-through command 200 includes a header block 210 and a payload block 220. The header block 210 is coded using a computer language that is understood by all pipelined slave processors 120₁-120_{K} of the plurality 101. Herein, the term "computer language" is collectively used in reference to programming languages and formats for instructions and data used by the master and slave processors.

In one exemplary embodiment, the header block 210 includes data modules 202, 204, and 206. In alternate embodiments (not shown), contents of the data modules 202, 204, and 206 may form a single data module or contents of any two of these modules may be included in one data module.

A data module 202 contains information identifying the pass-through command 200 (i.e., an ID of the pass-through command) among other commands of the master processor 110. A data module 204 contains information identifying the destined slave processor (e.g., address of the destined slave processor), and a data module 206 contains information regarding a bit length (for example, in the units of bytes) of the payload block 220. In an alternate embodiment (not shown), in the header block 210, the data module 206 may precede the data module 204.

The payload block 220 is coded using a computer language that is understood by the destined slave processor and includes at least one data module 222 comprising an instruction generated by the master processor 110 for execution by the respective destined slave processor (data modules 222₁-222_{N} are shown, where N is an integer and N≥1).

In further embodiments, the pass-through command 200 may instruct the destined slave processor to confirm the receipt or execution of the command by sending a pre-determined message upstream to the master processor 110 (i.e., in a direction illustrated using arrow 105). For example, to efficiently communicate such a message to the master processor 110, the pass-through command 200 may instruct the destined slave processor (i) to replace, in the data module 204 of the received pass-through command, information identifying the destined slave processor with information identifying the master processor 110, (ii) include the pre-determined message in the payload- block 220, and (iii) forward the modified (i.e., reply) pass-through command to an adjacent upstream slave processor.

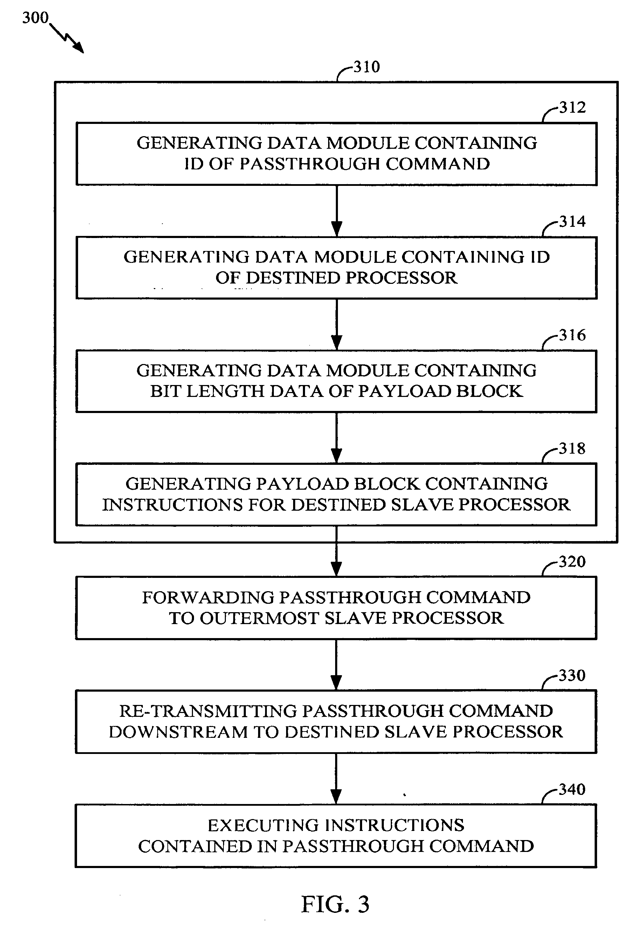

FIG. 3 depicts a flow diagram illustrating a method 300 for communicating instructions to pipelined slave processors 120 in the multi-processor system 100 of FIG. 1. In various embodiments, method steps of the method 300 are performed in the depicted order or at least two of these steps or portions thereof (e.g., sub-steps 312, 314, 316, and 318) may be performed contemporaneously, in parallel, or in a different order. Those skilled in the art will readily appreciate that an order of executing at least a portion of other discussed below processes or routines may also be modified. To best understand the invention, the reader should simultaneously refer to FIGS. 1-3.

At step 310, the master processor 110 generates the pass-through command 200. Illustratively, step 310 comprises sub-steps 312, 314, 316, and 318. In the depicted embodiment, during sub-steps 312, 314, and 316, the master processor 110 generates the header block 210 of the pass-through command 200 and, during sub-step 318, the master processor generates the payload block 220 of the pass-through command, respectively.

At sub-step 312, the master processor 110 generates the data module 202 of the header block 210. The data module 202 contains information identifying the pass-through command 200, and this information is coded using a computer language understood by each one of the slave processors 120₁-120_{K}.

At sub-step 314, the master processor 110 generates the data module 204 of the header block 210. The data module 204 contains information identifying the destined slave processor (e.g., slave processor 120_{K}) and instructions for intermediate non-destined slave processors disposed between the master processor and the destined slave processor (i.e., slave processors 120₁-120_{K-1}).

In particular, the data module 204 contains a request for the non-destined slave processors to forward, without decoding, the pass-through command 200 downstream to the destined slave processor. In one embodiment, the non-destined slave processors are instructed to copy the pass-through command from an input buffer of a respective non-destined slave processor to the output buffer of the slave processor. Content of the data module 204 is coded using a computer language understood by each one of the slave processors 120₁-120_{K}.

At sub-step 316, the master processor 110 generates the data module 206 of the header block 210. The data module 206 contains information identifying a bit length of the payload block 220 of the pass-through command 200. Similar to the contents of the data modules 202 and 204, this information is coded using a computer language understood by each one of the slave processors 120₁-120_{K}.

At sub-step 318, the master processor 110 generates the payload block 220 of the pass-through command 200. The payload block 220 contains at least one instruction 222 for the destined slave processor. Contents of the payload block 220 (i.e., instructions 222₁-222_{N}) are coded using a computer language understood by the destined slave processor (e.g., slave processor 120_{K}).

At step 320, the master processor 110 assembles the pass-through command 200 and transmits the command to the outmost slave processor (e.g., slave processor 120₁).

At step 330, when the outmost slave processor is the destined slave processor, that processor executes instructions contained in the payload block 220 of the command. Accordingly, when the outmost slave processor is not the destined slave processor, the outmost slave processor forwards (i.e., re-transmits) the pass-through command 200 downstream to the adjacent slave processor (i.e., slave processor 120₂), which, unless that slave processor is the destined slave processor, forwards the command to the next downstream slave processor (i.e., slave processor 120₃). Such cycles of re-transmitting the pass-through command 200 continue until the command reaches the destined slave processor. In one embodiment, during step 330, the received pass-through command 200 in copied, without recoding, from an input buffer of a recipient non-destined slave processor to an output buffer of that processor.

At step 340, the pass-through command 200 reaches the destined slave processor, which executes the instructions contained in the payload block 220 of the command. In one embodiment, such instructions may include a request from the master processor 110 to confirm the receipt or execution of the pass-through command. As discussed above in reference to FIG. 2, return communication from the destined slave processor may comprise a message included in the payload block 220 of a modified pass through command addressed to the master processor 110. Such command is then sequentially re-submitted by the slave processors 120 disposed between the destined slave processor and the master processor 110 until the command reaches the master processor.

In exemplary embodiments, the method 300 may be implemented in hardware, software, firmware, or any combination thereof in a form of a computer program product comprising one or more computer-executable instructions. When implemented in software, the computer program product may be stored on or transmitted using a computer-readable medium, which includes computer storage medium and computer communication medium.

The term "computer storage medium" refers herein to any medium adapted for storing the instructions that cause the computer to execute the method. By way of example, and not limitation, the computer storage medium may comprise solid-sate memory devices, including electronic memory devices (e.g., RAM, ROM, EEPROM, and the like), optical memory devices (e.g., compact discs (CD), digital versatile discs (DVD), and the like), or magnetic memory devices (e.g., hard drives, flash drives, tape drives, and the like), or other memory devices adapted to store the computer program product, or a combination of such memory devices.

The term "computer communication medium" refers herein to any physical interface adapted to transmit the computer program product from one place to another using for example, a modulated carrier wave, an optical signal, a DC or AC current, and the like means. By way of example, and not limitation, the computer communication medium may comprise twisted wire pairs, printed or flat cables, coaxial cables, fiber-optic cables, digital subscriber lines (DSL), or other wired, wireless, or optical serial or parallel interfaces, or a combination thereof.

The previous description of the disclosure is provided to enable any person skilled in the art to make or use the disclosure.

## Claims

1. An integrated circuit (IC) comprising:
a master processor (110) adapted to communicate with pipelined slave processors (120) connected in series, **characterized in that** the master processor (110) is adapted to:
generate a pass-through command (200) including a header block (210) and a payload block (220), the header block (210) being coded using a computer language understood by the pipelined slave processors (120);
generate for a destined slave processor of the pipelined slave processors at least one instruction coded using a computer language understood by the destined slave processor;
generate a data module containing information identifying the pass-through command and containing a request to forward the pass-through command, without de-coding, to the destined slave processor;
incorporate the at least one instruction in the payload block (220) and the data module in the header block (210); and
transmit the pass-through command (200) to an outermost slave processor of the pipelined slave processors;
wherein the pass-through command (200) is forwarded, without recoding, from a non-destined slave processor of the pipelined slave processors (120) to an adjacent downstream slave processor of the pipelined slave processors (120) until the pass-through command reaches the destined slave processor.

2. The integrated circuit of claim 1, wherein the master processor (110) is adapted to generate the pass-through command (200) by:
generating a second data module containing information identifying the destined slave processor; coding the second data module in the computer language understood by the slave processors; and including the second data module in the header block (210).

3. The integrated circuit of claim 1, wherein the master processor (110) is adapted to generate the pass-through command (200) by:
generating a third data module containing information identifying a bit length of the payload block; coding the third data module using the computer language understood by the slave processors; and including the third data module in the header block (210).

4. The integrated circuit of claim 1, wherein the master processor (110) is adapted to transmit the pass-through command (200) by forwarding the pass-through command to an outermost one of the pipelined slave processors (120).

5. The integrated circuit of claim 1, wherein the non-destined slave processor is adapted to copy the pass-through command (200) from an input buffer (122) of the non-destined slave processor to an output buffer (124) of the non-destined slave processor.

6. The integrated circuit of claim 1, wherein the destined slave processor is adapted to acknowledge a receipt of the pass-through command (200).

7. The integrated circuit of claim 6, wherein the destined slave processor is adapted to:
generate a pre-determined message using a computer language understood by the master processor (110); include the pre-determined message in the payload block of a reply pass-through command; address the pre-determined message to the master processor in the header block of the reply pass-through command; and
forward the reply pass-through command to an upstream slave processor of the pipelined slave processors.

8. An integrated circuit (IC) comprising:
a plurality of pipelined slave processors (120) being connected in series and adapted to communicate with a master processor (110), the integrated circuit being **characterized in that** the plurality of pipelined slave processors (120) adapted to:
receive a pass-through command (200) from the master processor (110), the pass-through command (200) including a header block (210) and a payload block (220), the header block (210) coded using a computer language understood by the pipelined slave processors (120);
the header payload (220) including, for a destined slave processor of the pipelined slave processors (120), at least one instruction coded using a computer language understood by the destined slave processor;
the pass-through command (200) being received from the master processor (110) by an outermost slave processor of the pipelined slave processors (120);
wherein a non-destined slave processor of the pipelined slave processors (120) forwards, without recoding, the pass-through command to an adjacent downstream slave processor of the pipelined slave processors until the pass-through command (200) reaches the destined slave processor.

9. A multi-processor system, comprising:
a plurality of pipelined slave processors (120) connected in series, the plurality of pipelined processors (120) including an outermost slave processor, a destined slave processor, and a non-destined slave processor; and
a master processor (110) coupled to the outermost slave processor, **characterized in that** the master processor adapted to:
generate a pass-through command (200) including a header block (210) and a payload block (220), the header block (210) being coded using a computer language understood by the pipelined slave processors (120), and the non-destined slave processor being adapted to forward, without recoding, the pass-through command to an adjacent downstream slave processor of the pipelined slave processors (120);
generate for the destined slave processor at least one instruction coded using a computer language understood by the destined slave processor, the destined slave processor being adapted to execute the at least one instruction;
generate a data module containing information identifying the pass-through command and containing a request to forward the pass-through command, without de-coding, to the destined slave processor;
incorporate the at least one instruction in the payload block (220) and the data module in the header block (210); and transmit the pass-through command (200) to the outermost slave processor.

10. A method (300) for communicating instructions to a slave processor in a multi-processor system having a master processor and pipelined slave processors, the pipelined slave processors connected in series, the method comprising:
at the master processor:
generating (310) a pass-through command including a header block and a payload block, the header block being coded using a computer language understood by the pipelined slave processors;
generating (318) for a destined slave processor of the pipelined slave processors at least one instruction coded using a computer language understood by the destined slave processor;
generating (312) a data module containing information identifying the pass-through command and containing a request to forward the pass-through command, without de-coding, to the destined slave processor;
including the at least one instruction in the payload block and the data module in the header block; and
transmitting the pass-through command to a slave processor of the pipelined slave processors adapted for coupling to the master processor;
at a non-destined slave processor:
forwarding (320), without recoding, the pass-through command to an adjacent downstream slave processor of the pipelined slave processors; and
at the destined slave processor:
executing (340) the at least one instruction.

## Patentansprüche

1. Eine integrierte Schaltung bzw. IC (IC = integrated circuit), die Folgendes aufweist.
einen Master-Prozessor (110), der ausgelegt ist zum Kommunizieren mit Pipeline-Slave-Prozessoren (120), die in Reihe geschaltet sind, **dadurch gekennzeichnet, dass** der Master-Prozessor (110) ausgelegt ist zum:
Generieren eines Durchgangsbefehls (200), der einen Headerblock (210) und einen Nutzdatenblock (220) beinhaltet, wobei der Headerblock (210) unter Verwendung einer Programmiersprache codiert ist, die von den Pipeline-Slave-Prozessoren (120) verstanden wird;
Generieren, für einen anvisierten Slave-Prozessor der Pipeline-Slave-Prozessoren, wenigstens eines Befehls, der unter Verwendung einer Programmiersprache codiert ist, die von dem anvisierten Slave-Prozessor verstanden wird;
Generieren eines Datenmoduls, das Information aufweist, die den Durchgangsbefehl identifiziert, und das eine Anfrage aufweist, den Durchgangsbefehl ohne Decodierung an den anvisierten Slave-Prozessor weiterzuleiten;
Aufnehmen des wenigstens einen Befehls in den Nutzdatenblock (220) und das Datenmodul in dem Headerblock (210); und
Senden bzw. Übertragen des Durchgangsbefehls (200) an einen am weitesten außen gelegenen Slave-Prozessor der Pipeline-Slave-Prozessoren;
wobei der Durchgangsbefehl (200) weitergeleitet wird, und zwar ohne Re-Codierung, von einem nicht anvisierten Slave-Prozessor der Pipeline-Slave-Prozessoren (120) zu einem benachbarten, nachgelagerten Slave-Prozessor der Pipeline-Slave-Prozessoren (120), bis der Durchgangsbefehl den anvisierten Slave-Prozessor erreicht.

2. Integrierte Schaltung nach Anspruch 1, wobei der Master-Prozessor (110) ausgelegt ist zum Generieren des Durchgangsbefehls (200) durch:
Genieren eines zweiten Datenmoduls, das Information aufweist, die den anvisierten Slave-Prozessor identifiziert; Codieren des zweiten Datenmoduls in der Programmiersprache, die von den Slave-Prozessoren verstanden wird; und Aufnehmen des zweiten Datenmoduls in den Headerblock (210).

3. Integrierte Schaltung nach Anspruch 1, wobei der Master-Prozessor (110) ausgelegt ist zum Generieren des Durchgangsbefehls (200) durch:
Generieren eines dritten Datenmoduls, das Information aufweist, die eine Bitlänge des Nutzdatenblockes identifiziert; Codieren des dritten Datenmoduls unter Verwendung der Programmiersprache, die von den Slave-Prozessoren verstanden wird; und Aufnehmen des dritten Datenmoduls in den Headerblock (210).

4. Integrierte Schaltung nach Anspruch 1, wobei der Master-Prozessor (110) ausgelegt ist zum Übertragen des Durchgangsbefehls (200) durch Weiterleiten des Durchgangsbefehls an einen am weitesten außen gelegenen der Pipeline-Slave-Prozessoren (120).

5. Integrierte Schaltung nach Anspruch 1, wobei der nicht anvisierte Slave-Prozessor ausgelegt ist zum Kopieren des Durchgangsbefehls (200) von einem Eingangspuffer (122) des nicht anvisierten Slave-Prozessors in einen Ausgangspuffer (124) des nicht anvisierten Slave-Prozessors.

6. Integrierte Schaltung nach Anspruch 1, wobei der anvisierte Slave-Prozessor ausgelegt ist zum Bestätigen eines Empfangs des Durchgangsbefehls (200).

7. Integrierte Schaltung nach Anspruch 6, wobei der anvisierte Slave-Prozessor ausgelegt ist zum:
Generieren einer vorbestimmten Nachricht unter Verwendung einer Programmiersprache, die von dem Master-Prozessor (110) verstanden wird;
Aufnehmen der vorbestimmten Nachricht in den Nutzdatenblock eines Antwortdurchgangsbefehls; Adressieren der vorbestimmten Nachricht an den Master-Prozessor in dem Header-Block des Antwortdurchgangsbefehls; und Weiterleiten des Antwortdurchgangsbefehls an einen vorgelagerten Slave-Prozessor der Pipeline-Slave-Prozessoren.

8. Eine integrierte Schaltung bzw. IC (IC = integrated circuit), die Folgendes aufweist:
eine Vielzahl von Pipeline-Slave-Prozessoren (120), die in Reihe angeschlossen sind und ausgelegt sind zum Kommunizieren mit einem Master-Prozessor (110), wobei die integrierte Schaltung **dadurch gekennzeichnet ist, dass** die Vielzahl von Pipeline-Slave-Prozessoren (120) ausgelegt ist zum:
Empfangen eines Durchgangsbefehls (200) von dem Master-Prozessor (110), wobei der Durchgangsbefehl (200) einen Headerblock (210) und einen Nutzdatenblock (220) beinhaltet, wobei der Headerblock (210) unter Verwendung einer Programmiersprache codiert ist, die von den Pipeline-Slave-Prozessoren (120) verstanden wird;
wobei die Headernutzdaten (220) für einen anvisierten bzw. vorgesehenen Slave-Prozessor der Pipeline-Slave-Prozessoren (120) wenigstens einen Befehl beinhaltet, der unter Verwendung einer Programmiersprache codiert ist, die von dem anvisierten Slave-Prozessor verstanden wird;
wobei der Durchgangsbefehl (200) von dem Master-Prozessor (110) durch einen am weitesten außen gelegenen Slave-Prozessor der Pipeline-Slave-Prozessoren (120) empfangen wird;
wobei ein nicht anvisierter Slave-Prozessor der Pipeline-Slave-Prozessoren (120) den Durchgangsbefehl ohne Re-Codierung an einen benachbarten, nachgelagerten Slave-Prozessor der Pipeline-Slave-Prozessoren weiterleitet, bis der Durchgangsbefehls (200) den anvisierten Slave-Prozessor erreicht.

9. Ein Multiprozessorsystem, das Folgendes aufweist:
eine Vielzahl von Pipeline-Slave-Prozessoren (120), die in Reihe geschaltet sind, wobei die Vielzahl von Pipeline-Prozessoren (120) einen am weitesten außen gelegenen Slave-Prozessor, einen anvisierten Slave-Prozessor und einen nicht anvisierten Slave-Prozessor beinhaltet; und
einen Master-Prozessor (110), der an den am weitesten außen gelegenen Slave-Prozessor gekoppelt ist, **dadurch gekennzeichnet, dass** der Master-Prozessor ausgelegt ist zum:
Generieren eines Durchgangsbefehls (200), der einen Headerblock (210) und einen Nutzdatenblock (220) beinhaltet, wobei der Headerblock (210) unter Verwendung einer Programmiersprache codiert ist, die von den Pipeline-Slave-Prozessoren (120) verstanden wird, und wobei der nicht anvisierte Slave-Prozessor ausgelegt ist zum Weiterleiten, und zwar ohne Re-Codierung, des Durchgangsbefehls an den benachbarten, nachgelagerten Slave-Prozessor der Pipeline-Slave-Prozessoren (120);
Generieren, für den anvisierten Slave-Prozessor, wenigstens eines Befehls, der unter Verwendung einer Programmiersprache codiert ist, die von dem anvisierten Slave-Prozessor verstanden wird, wobei der anvisierte Slave-Prozessor ausgelegt ist zum Ausführen des wenigstens einen Befehls;
Generieren eines Datenmoduls, das Information aufweist, die den Durchgangsbefehl identifiziert und das eine Anfrage zum Weiterleiten des Durchgangsbefehls, und zwar ohne Decodierung, an den anvisierten Slave-Prozessor aufweist;
Aufnehmen des wenigstens einen Befehls in den Nutzdatenblock (220) und das Datenmodul in dem Headerblock (210); und Senden des Durchgangsbefehls (200) an den am weitesten außen gelegenen Slave-Prozessor.

10. Ein Verfahren (300) zum Kommunizieren von Instruktionen an einen SlaveProzessor in einem Multi-Prozessor-System mit einem Master-Prozessor und Pipeline-Slave-Prozessoren, wobei die Pipeline-Slave-Prozessoren in Reihe geschaltet sind, wobei das Verfahren Folgendes aufweist:
an dem Master-Prozessor:
Generieren (310) eines Durchgangsbefehls, der einen Headerblock und einen Nutzdatenblock beinhaltet, wobei der Headerblock unter Verwendung einer Programmiersprache codiert ist, die von den Pipeline-Slave-Prozessoren verstanden wird;
Generieren (318), für einen anvisierten bzw. vorgesehenen Slave-Prozessor der Pipeline-Slave-Prozessoren, wenigstens eines Befehls, der unter Verwendung einer Programmiersprache codiert ist, die von dem anvisierten Slave-Prozessor verstanden wird;
Generieren (312) eines Datenmoduls, das Information aufweist, die den Durchgangsbefehl identifiziert und das eine Anfrage aufweist, den Durchgangsbefehl ohne Decodierung an-den anvisierten Slave-Prozessor weiterzuleiten;
Aufnehmen des wenigstens einen Befehls in den Nutzdatenblock und das Datenmodul in dem Headerblock; und
Senden bzw. Übertragen des Durchgangsbefehls an einen Slave-Prozessor der Pipeline-Slave-Prozessoren, der zur Koppelung an den Master-Prozessor ausgelegt ist;
an einem nicht anvisierten Slave-Prozessor:
Weiterleiten (320), und zwar ohne Re-Codierung, des Durchgangsbefehls an einen benachbarten, nachgelagerten Slave-Prozessor der Pipeline-Slave-Prozessoren; und
an dem anvisierten Slave-Prozessor:
Ausführen (340) des wenigstens einen Befehls.

## Revendications

1. Circuit intégré (IC) comprenant :
un processeur maître (110) adapté à communiquer avec des processeurs esclaves en pipeline (120) connectés en série, **caractérisé en ce que** le processeur maître (110) est adapté à :
générer une commande à laisser passer (200) comprenant un bloc d'en-tête (210) et un bloc de charge utile (220), le bloc d'en-tête (210) étant codé en utilisant un langage informatique compris par les processeurs esclaves en pipeline (120) ;
générer pour un processeur esclave destinataire parmi les processeurs esclaves en pipeline au moins une instruction codée en utilisant un langage informatique compris par le processeur esclave destinataire ;
générer un module de données contenant des informations identifiant la commande à laisser passer et contenant une requête pour communiquer la commande à laisser passer, sans décodage, au processeur esclave destinataire ;
incorporer ladite au moins une instruction dans le bloc de charge utile (220) et le module de données dans le bloc d'en-tête (210) ; et
transmettre la commande à laisser passer (200) à au processeur esclave le plus à l'extérieur des processeurs esclaves en pipeline ;
dans lequel la commande à laisser passer (200) est communiquée, sans recodage, à partir d'un processeur esclave non destinataire parmi les processeurs esclaves en pipeline (120) à un processeur esclave adjacent en aval parmi les processeurs esclaves en pipeline (120) jusqu'à ce que la commande à laisser passer atteigne le processeur esclave destinataire.

2. Circuit intégré selon la revendication 1, dans lequel le processeur maître (110) est adapté à générer la commande à laisser passer (200) :
en générant un deuxième module de données contenant des informations identifiant le processeur esclave destinataire ; en codant le deuxième module de données dans le langage informatique compris par les processeurs esclaves ; et en incluant le deuxième module de données dans le bloc d'en-tête (210).

3. Circuit intégré selon la revendication 1, dans lequel le processeur maître (110) est adapté à générer la commande à laisser passer (200) :
en générant un troisième module de données contenant des informations identifiant une longueur en bits du bloc de charge utile, en codant le troisième module de données en utilisant le langage informatique compris par les processeurs esclaves ; et en incluant le troisième module de données dans le bloc d'en-tête (210).

4. Circuit intégré selon la revendication 1, dans lequel le processeur maître (110) est adapté à transmettre la commande à laisser passer (200) en communiquant la commande à laisser passer au processeur esclave en pipeline le plus à l'extérieur parmi les processeurs esclaves en pipeline (120).

5. Circuit intégré selon la revendication 1, dans lequel le processeur esclave non destinataire est adapté à copier la commande à laisser passer (200) d'un tampon d'entrée (122) du processeur esclave non destinataire vers un tampon de sortie (124) du processeur esclave non destinataire.

6. Circuit intégré selon la revendication 1, dans lequel le processeur esclave destinataire est adapté à accuser réception de la commande à laisser passer (200).

7. Circuit intégré selon la revendication 6, dans lequel le processeur esclave destinataire est adapté à :
générer un message prédéterminé en utilisant un langage informatique compris par le processeur maître (110), inclure le message prédéterminé dans le bloc de charge utile d'une commande à laisser passer de réponse ; adresser le message prédéterminé au processeur maître dans le bloc d'en-tête de la commande à laisser passer de réponse ; et
communiquer la commande à laisser passer de réponse à un processeur esclave amont parmi les processeurs esclaves en pipeline.

8. Circuit intégré (IC) comprenant :
une pluralité de processeurs esclaves en pipeline (120) qui sont connectés en série et adaptés à communiquer avec un processeur maître (110), le circuit intégré étant **caractérisé en ce que** la pluralité de processeurs esclaves en pipeline (120) est adaptée à :
recevoir une commande à laisser passer (200) à partir du processeur maître (110), la commande à laisser passer (200) comprenant un bloc d'en-tête (210) et un bloc de charge utile (220), le bloc d'en-tête (210) étant codé en utilisant un langage informatique compris par les processeurs esclaves en pipeline (120) ;
la charge utile de l'en-tête (220) comprenant, pour un processeur esclave destinataire parmi les processeurs esclaves en pipeline (120), au moins une instruction codée en utilisant un langage informatique compris par le processeur esclave destinataire ;
la commande à laisser passer (200) étant reçue à partir du processeur maître (110) par le processeur esclave le plus à l'extérieur parmi les processeurs esclaves en pipeline (120) ;
dans lequel un processeur esclave non destinataire parmi les processeurs esclaves en pipeline (120) communique, sans recodage, la commande à laisser passer à un processeur esclave adjacent en aval parmi les processeurs esclaves en pipeline jusqu'à ce que la commande à laisser passer (200) atteigne le processeur esclave destinataire.

9. Système multiprocesseur comprenant :
une pluralité de processeurs esclaves en pipeline (120) connectés en série, la pluralité de processeurs en pipeline (120) comprenant un processeur esclave le plus à l'extérieur, un processeur esclave destinataire, et un processeur esclave non destinataire ; et
un processeur maître (110) couplé au processeur esclave le plus à l'extérieur, **caractérisé en ce que** le processeur maître est adapté à :
générer une commande à laisser passer (200) comprenant un bloc d'en-tête (210) et un bloc de charge utile (220), le bloc d'en-tête (210) étant codé en utilisant un langage informatique compris par les processeurs esclaves en pipeline (120), et le processeur esclave non destinataire étant adapté à communiquer, sans recodage, la commande à laisser passer à un processeur esclave adjacent en aval parmi les processeurs esclaves en pipeline (120) ;
générer pour le processeur esclave destinataire au moins une instruction codée en utilisant un langage informatique compris par le processeur esclave destinataire, le processeur esclave destinataire étant adapté à exécuter ladite au moins une instruction ;
générer un module de données contenant des informations identifiant la commande à laisser passer et contenant une requête pour communiquer la commande à laisser passer, sans décodage, au processeur esclave destinataire ;
incorporer ladite au moins une instruction dans le bloc de charge utile (220) et le module de données dans le bloc d'en-tête (210) ; et transmettre la commande à laisser passer (200) au processeur esclave le plus à l'extérieur.

10. Procédé (300) pour communiquer des instructions à un processeur esclave dans un système multiprocesseur comportant un processeur maître et des processeurs esclaves en pipeline, les processeurs esclaves en pipeline étant connectés en série, le procédé comprenant :
au niveau du processeur maître :
générer (310) une commande à laisser passer comprenant un bloc d'en-tête et un bloc de charge utile, le bloc d'en-tête étant codé en utilisant un langage informatique compris par les processeurs esclaves en pipeline ;
générer (318) pour un processeur esclave destinataire parmi les processeurs esclaves en pipeline au moins une instruction codée en utilisant un langage informatique compris par le processeur esclave destinataire ;
générer (312) un module de données contenant des informations identifiant la commande à laisser passer et contenant une requête pour communiquer la commande à laisser passer, sans décodage, au processeur esclave destinataire ;
inclure ladite au moins une instruction dans le bloc de charge utile et le module de données dans le bloc d'en-tête ; et
transmettre la commande à laisser passer à un processeur esclave parmi les processeurs esclaves en pipeline adapté à se coupler au processeur maître ;
au niveau d'un processeur esclave non destinataire :
communiquer (320), sans recodage, la commande à laisser passer à un processeur esclave adjacent en aval parmi les processeurs esclaves en pipeline ; et
au niveau du processeur esclave destinataire :
exécuter (340) ladite au moins une instruction.
